# EUROPEAN PATENT SPECIFICATION

(11) **EP 3 769 953 B1**
(45) Date of publication and mention of the grant of the patent: **07.12.2022**
(21) Application number: 20187540.8
(22) Date of filing: 23.07.2020
(51) Int. Cl.: B32B 3/26, B32B 7/12, B32B 27/08, B32B 15/08, B32B 27/30, B32B 27/36, B32B 27/40

(54) **FILM MATERIAL WITH CUTTING GRAIN**
FOLIENMATERIAL MIT SCHNEIDKORN
MATÉRIAU DE FILM À GRAINS COUPANTS

(30) Priority: 24.07.2019 TW 108126252
(43) Date of publication of application: 27.01.2021
(73) Proprietor: Chance Line Industrial Co., Ltd., Siansi Township, Changhua County (TW)
(72) Inventor: YAO, Ming-Hsien, Siansi Township, Changhua County (TW)
(74) Representative: Lang, Christian

(56) References cited:
- US-A1- 2018 218 651
- DATABASE WPI Week 201546 Thomson Scientific, London, GB; AN 2015-387844 XP002801177, -& JP 5 745683 B1 (SANTO SHOJI KK) 8 July 2015 (2015-07-08)

## Description

### BACKGROUND OF THE INVENTION

### Field of Invention

The invention relates to a film material, and more particularly to a film material capable of being used to cut out graphics and/or texts.

### Related Art

When clothes show texts and/or graphics, they can be appealing to the eye and can create uniqueness. In order to achieve this object, the traditional method prints graphics/texts on clothing, so that the clothing has graphics and/or texts. However, those who employ printing method must make screens for printing. The more styles of texts and/or graphics that need to be printed, the more time it takes to proof and make more screens, and thus the cost of making a plate will be very expensive. Because of the slow and time-consuming proofing, the rate of changing graphics/texts is relatively slow, which is not in line with the current fast-changing trend.

The inventor has invented patent application Nos. EP17184131.5 and EP20153744.6. The technical contents of these two applications are related to a film material that enables consumers or enterprises to cut texts/graphics on the film material, and the cut texts/graphics are pasted on clothes, so as to avoid the drawbacks of time-consuming and costly proofing and plate making of the printing technology mentioned above, and the styles of the texts/graphics can be changed at will.

Document JP 5745683 B1 relates to a conventional transfer technique for forming a pattern from a metal layer on a fabric surface, which uses a transfer sheet comprising a support layer, a first layer provided on the support layer and a second layer provided on the first layer, and a decorative sheet consisting of a release layer and a metal layer provided on the release layer. In a first thermocompression bonding step the transfer sheet is fixed to a fabric via the second layer, then, the support layer is peeled off to expose the first layer. Afterwards, a second thermocompression bonding step is performed, in which the metal layer of the decorative sheet is attached to the exposed first layer, and finally, the release layer is peeled off in order to expose the metal layer. The transfer sheet can be pre-cut in a desired pattern and in the transfer process, the metal layer is only attached to the fabric at the positions, where the first layer of the transfer sheet is applied, whereas those metal layer parts not bonded to the first layer are removed together with the release layer.

Document US 2018/0218651 A1 teaches a multilayered sheet assembly for forming a sign, which comprises a carrier layer, a sign layer arranged on a first side of the carrier layer via a first adhesive layer and a strip layer arranged on the other side of the carrier layer in adhesively separable manner by means of a second adhesive layer. The multilayered sheet assembly can be pre-cut, wherein the cuts pass through the sign layer and the first adhesive layer and may further cut through the carrier layer and the second adhesive layer, but the cuts do not go through the strip layer. The cut surface of such conventional film material is exposed.

### SUMMARY OF THE INVENTION

An object of the present invention is to provide a film material, the film material has been pre-made with a cutting grain for a user to further cut out texts and/or graphics from the film material.

Another object of the present invention is to provide the above-mentioned film material, a structure thereof is easy to peel off unnecessary materials other than the cut texts/graphics.

Yet another object of the present invention is to provide the above-mentioned film material capable of providing a double-color or multi-color effect.

The above objectives are solved by a film material defined by the features of claim 1. Preferred implementations are further defined in the dependent claims.

The film material provided by the present invention includes:
a surface film layer, a first surface thereof forms a cut surface with cut marks to cause the cut surface to form a cutting grain;
a thermal bonding layer located on a second surface of the surface film layer;
the cut marks cut into the surface film layer without cutting off the thermal bonding layer; and
an adhering layer having an adhering surface; the cut surface of the surface film layer is bonded to the adhering surface of the adhering layer.

Preferably, the cut marks of the cut surface cut off the surface film layer to cause the cut surface to form a plurality of independent cut pieces.

Preferably, the adhering surface of the adhering layer has repeatable adhesion to cause the cut pieces capable of adhering to the adhering surface.

In this way, the film material is capable of being used to cut out a pattern (texts/graphics), and a cutting mark of the pattern cuts off the thermal bonding layer to reach the surface film layer. The pattern is adhered to a surface of an article with a heating device. The cutting grain formed by the cut surface becomes a grain of the pattern, and the cutting grain makes the pattern softer and more flexible to be capable of reliably adhering to the surface of the article.

The preset cutting grain and the cut pieces on the film material do not affect cutting of the pattern, do not affect removal of cut waste, and do not affect sticking of the pattern.

Preferably, further comprising: at least one inner film layer disposed between the surface film layer and the thermal bonding layer, and provided with cut marks with at least one type of depth to cause the cut surface and the pattern to be capable of presenting effects of three-dimensional look and multiple colors.

### BRIEF DESCRIPTION OF THE DRAWINGS

The objects, features and achieved efficacies of the present invention can be understood from the description and figures of several preferred embodiments below, wherein:
FIG. 1 is a front view of a film material according to one preferred embodiment of the present invention, a cut surface of the film material has been pre-cut with a grain, wherein FIGS. 1 to 5 are shown with a thermal bonding layer located at a lower side;
FIG. 2 is a cross-sectional view taken along section line 2-2 of FIG. 1;
FIG. 3 is a front view of the film material of FIG. 1 excluding an adhering layer;
FIG. 4 is a cross-sectional view taken along section line 4-4 of FIG. 3;
FIGS. 5(A) to 5(C) are schematic diagrams showing several forms of the cutting grain on the cut surface of the film material;
FIG. 6 is a schematic diagram of a manufacturing process of the film material of the present invention;
FIG. 7 is a schematic diagram showing a cut pattern of the film material, and FIGS. 7 to 10 are shown with the thermal bonding layer located at an upper side and the adhering layer located at a lower side;
FIG. 8 is a cross-sectional view taken along section line 8-8 of FIG. 7;
FIG. 9 shows that unnecessary parts have been removed from the film material of FIG. 7, leaving only parts of texts and graphics formed by cutting;
FIG. 10 is a cross-sectional view taken along section line 10-10 of FIG. 9;
FIG. 11 is a view of the pattern of the film material of FIG. 9 pasted on an article;
FIG. 12 is a view of the pattern adhered to the article;
FIG. 13 is a schematic diagram showing the pattern has been pasted;
FIG. 14 is a front view of the film material according to a second preferred embodiment of the present invention, wherein FIGS. 14 to 16 are shown with the thermal bonding layer located at a lower side;
FIG. 15 is a cross-sectional view of the film material of FIG. 14 excluding the adhering layer;
FIG. 16 is a cross-sectional view of the film material of FIG. 14;
FIG. 17 is a cross-sectional view of the film material showing the cut pattern with waste removed;
FIG. 18 is a schematic diagram partially showing a pattern of the preferred embodiment;
FIG. 19 is a schematic diagram partially showing another pattern of the preferred embodiment;
FIG. 20 is a cross-sectional view of the film material according to a third preferred embodiment of the present invention showing the cut pattern of the film material with waste removed; and
FIG. 21 is a schematic diagram partially showing a pattern of the film material of FIG. 20.

### DETAILED DESCRIPTION OF THE INVENTION

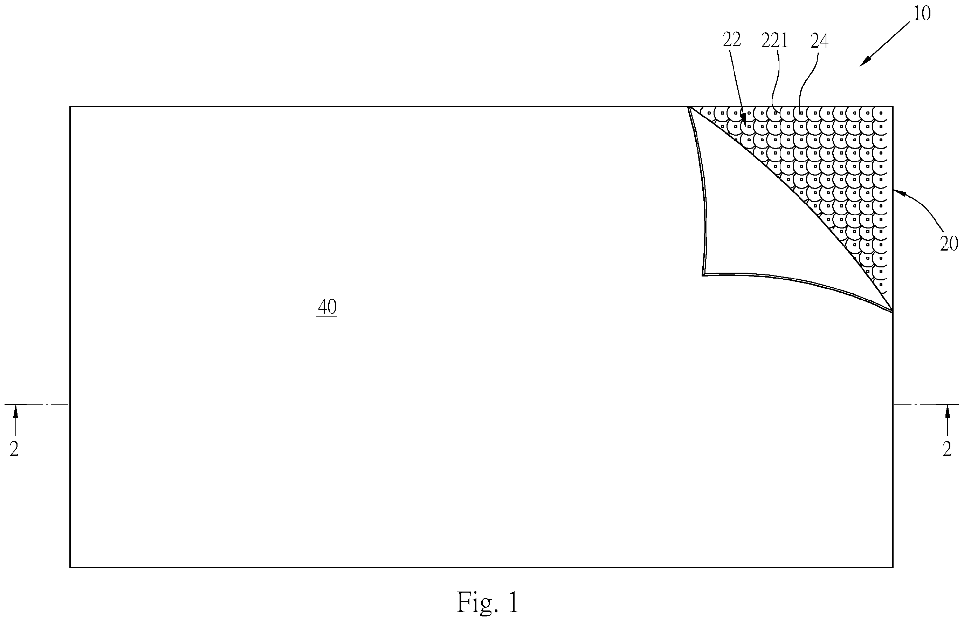

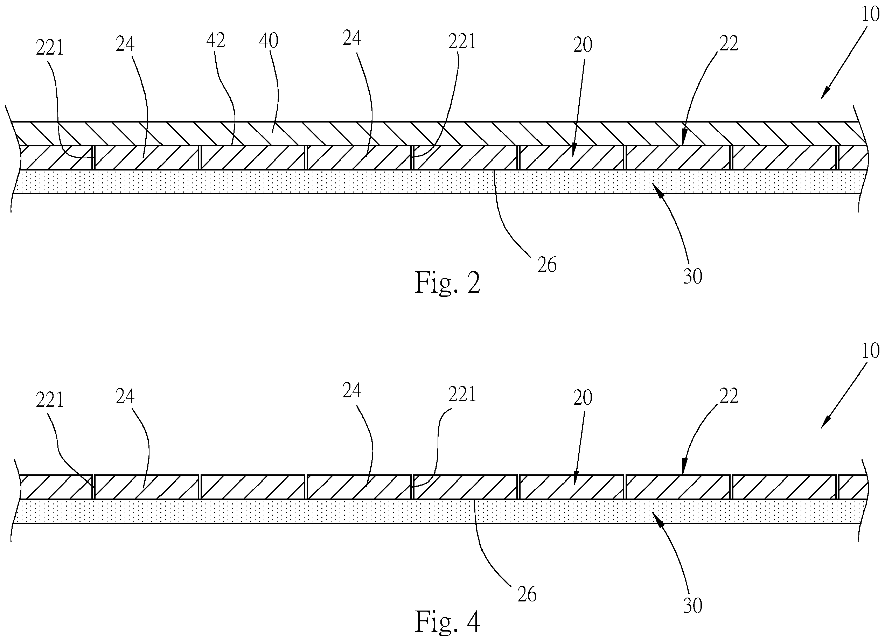

Please refer to FIG. 1 and FIG. 2 showing a film material 10 provided by one preferred embodiment of the present invention including: a surface film layer 20, a thermal bonding layer 30 and an adhering layer 40, wherein, according to directions shown in the figures, a second surface 26 (e.g. bottom surface) of the surface film layer 20 is bonded to the thermal bonding layer 30, and a first surface (e.g. top surface) of the surface film layer 20 is bonded to the adhering layer 40. The first surface of the surface film layer 20 in contact with the adhering layer 40 is a cut surface 22.

In this embodiment, the surface film layer 20 is made of polyurethane (PU), but can also be gold foil, polyethylene terephthalate (PET), polyvinyl chloride (PVC), thermoplastic polyurethanes (TPU) or thermoplastic-rubber material (TPR), the surface film layer 20 can be made with a variety of different colors, and can have different textures, such as an appearance that is metallic or reflective.

In this embodiment, the thermal bonding layer 30 is a hot-melt adhesive layer, which can generate adhesion when being heated.

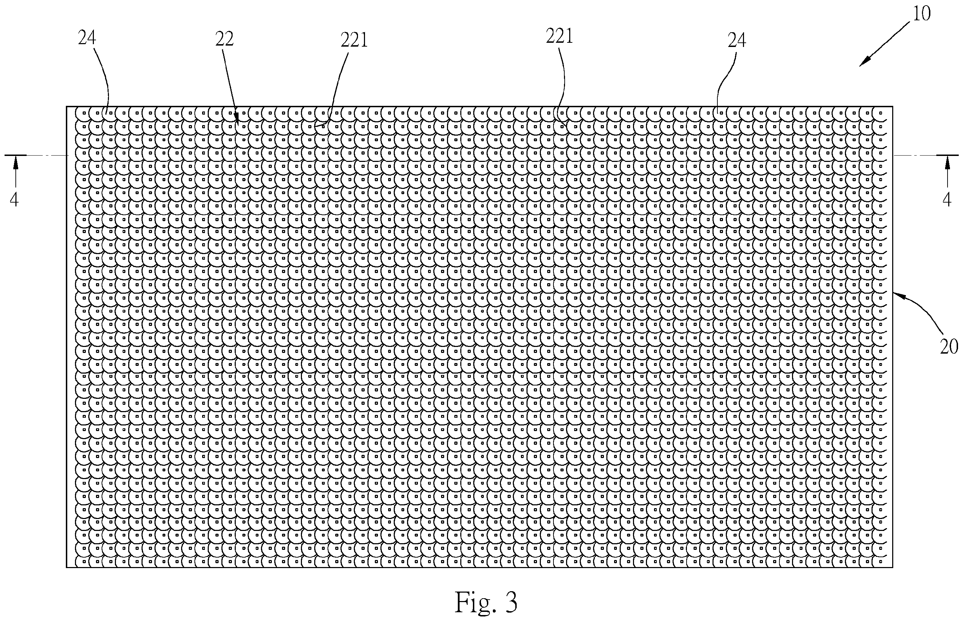

Please refer to FIG. 3 and FIG. 4, the cut surface 22 of the surface film layer 20 has been pre-cut with cut marks 221, so that the cut surface 22 exhibits regular or irregular cutting grains of various forms, and the cut marks 221 are cut into the surface film layer 20. The preferred embodiment uses laser cutting technology to cut regular grains/lines on the cut surface 22, and the cut marks 221 of grains/lines can cut off or do not cut off the surface film layer 20, but do not cut off the thermal bonding layer 30. In this embodiment, the cut marks 221 cut off the surface film layer 20 to cause the cut surface 22 to have a plurality of independent cut pieces 24 in the form of embroidery pieces. The cut marks 221 of the cut surface 22 not only make a surface of the film material 10 to have grains/lines, but also make the film material 10 softer, have better tactile impression, and form fine grains/lines in appearance.

In cutting operation, a cutting depth of the cut marks 221 may cut to the thermal bonding layer 30, but does not cut off the thermal bonding layer 30.

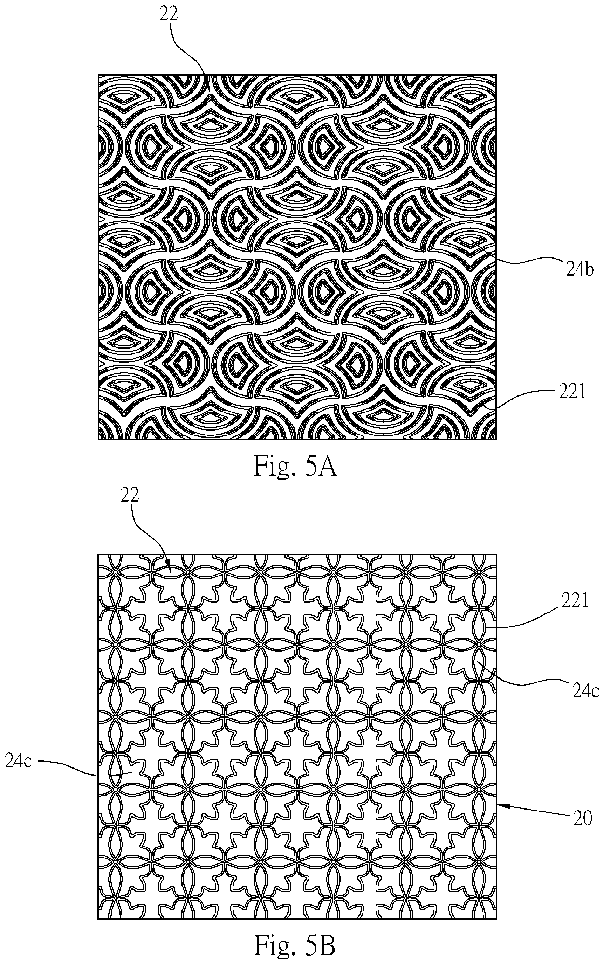

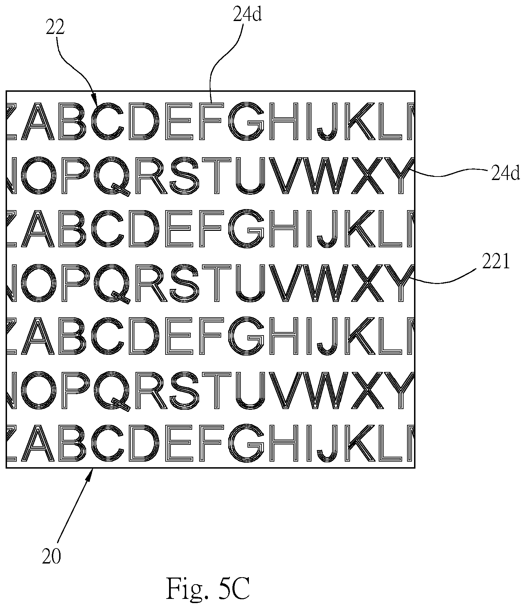

The cut surface 22 of the surface film layer 20 can be cut to form various grains/lines, but not limited to a grain shown in FIG. 3, for example, can be grains shown in FIGS. 5(A) to 5(C), but not limited thereto, the cut surface 22 of the surface film layer 20 has different cutting grains and can be cut to form cut pieces 24b, 24c and 24d of different shapes.

The adhering layer 40 is bonded to the cut surface 22 of the surface film layer 20 to form the film material 10. The adhering layer 40 has heat resistance, and one surface thereof is an adhering surface 42 to be pasted or bonded to the cut surface 22 of the surface film layer 20. Adhesion between the adhering layer 40 and the surface film layer 20 is preferably easy to peel off/separate, but not limited thereto. In addition, the adhering surface 42 is preferably to have repeatable stickiness.

A layer of adhesive (not shown) can be provided on one surface of the adhering layer 40 to form the adhering surface 42, the adhesive does not have residual glue phenomenon, that is, when the surface film layer 20 and the adhering layer 40 are separated, there will be no residue of the adhesive layer on the cut surface 22, in other words, glue of the adhesive layer will not remain on the surface of the surface film layer 20. In addition, the adhering surface 42 of the adhering layer 40 can be electrostatically processed to bond to the surface film layer 20 by means of electrostatic attraction, so it is not necessary for the adhering surface 42 to be provided with adhesive.

In this preferred embodiment, the adhering layer 40 is made of polyethylene terephthalate (PET) to be capable of withstanding high temperatures, such as 100-180 degrees Celsius.

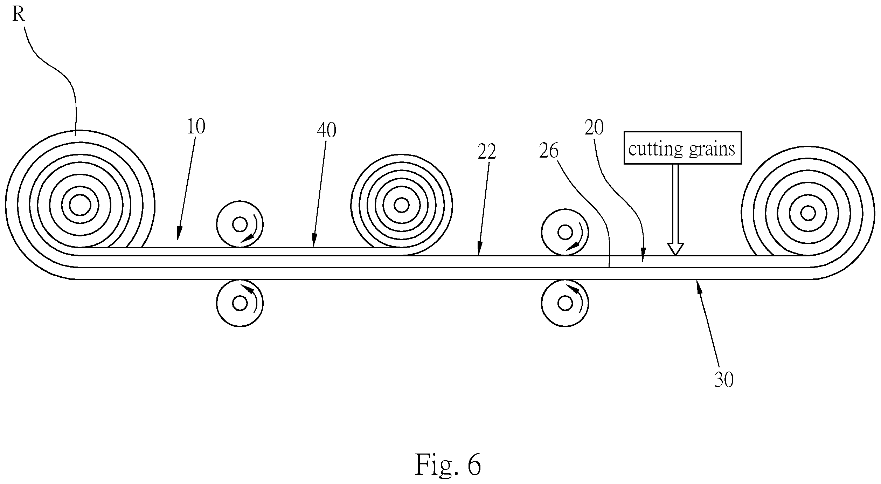

A manufacturing process of the film material 10 can be referred to FIG. 6. Firstly, the surface film layer 20 and the thermal bonding layer 30 that are bonded together are formed, the surface film layer 20 is bonded to the thermal bonding layer 30 with the second surface 26 thereof. After that, the first surface (cut surface) of the surface film layer 20 is cut to form the cut marks 221 and grains/lines. The surface film layer 20 and the thermal bonding layer 30 are bonded to the adhering layer 40 to complete the film material 10 of the present invention, and the film material 10 is rolled into a roll R for use. The manufacturing process of the film material 10 can be done in stages, that is: in a first stage, the surface film layer 20 and the thermal bonding layer 30 are bonded and the cut surface 22 is made, and then the adhering layer 40 is bonded to the cut surface 22 in a second stage.

The film material 10 of the present invention can be provided for enterprises or consumers to cut out various patterns (graphics and/or texts) of different styles using cutting devices or cutters, and a cut pattern is pasted on an article, for example, on a surface of a fabric (clothing), so that the cut texts and/or graphics are pasted on a surface of the article.

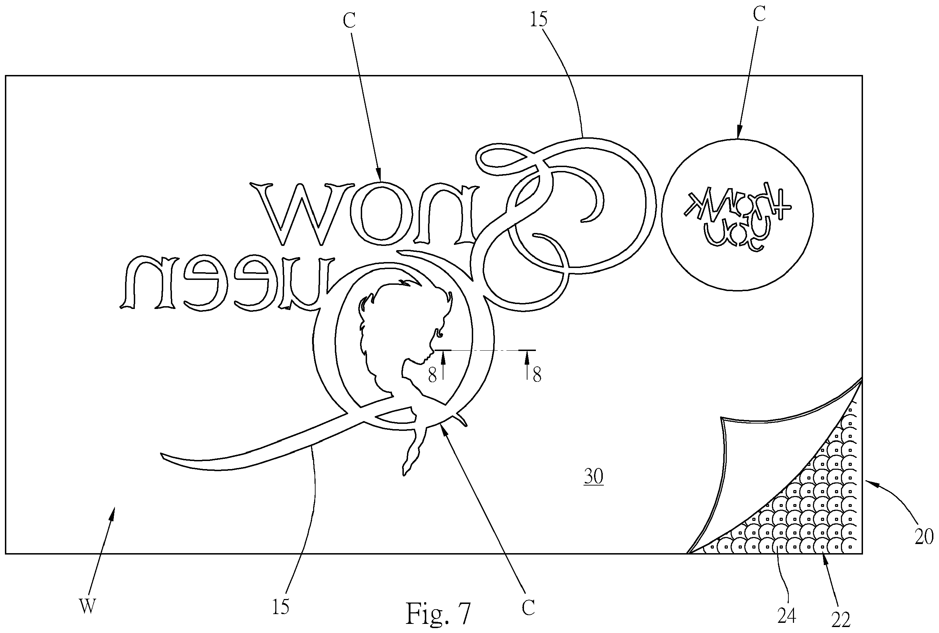

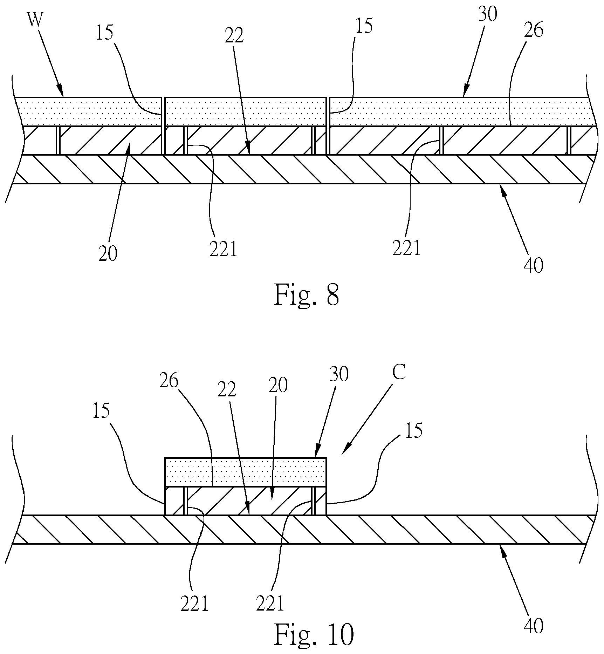

Please refer to FIG. 7 and FIG. 8, when a pattern (graphics and/or texts) needs to be cut out, the thermal bonding layer 30 and the surface film layer 20 are cut to cut out texts and graphics to be pasted, for example, Snow Queen, thank you and a cartoon character graphic located at the letter Q in Queen, as shown in a pattern marked with symbol C of FIG. 7, the cut pattern C is a mirror image. The pattern C (texts and graphic) is formed by cutting with cutting marks 15, the cutting marks 15 cut off the thermal bonding layer 30 and the surface film layer 20, but do not cut off the adhering layer 40. Parts other than the pattern C are a cut waste W being an unused material.

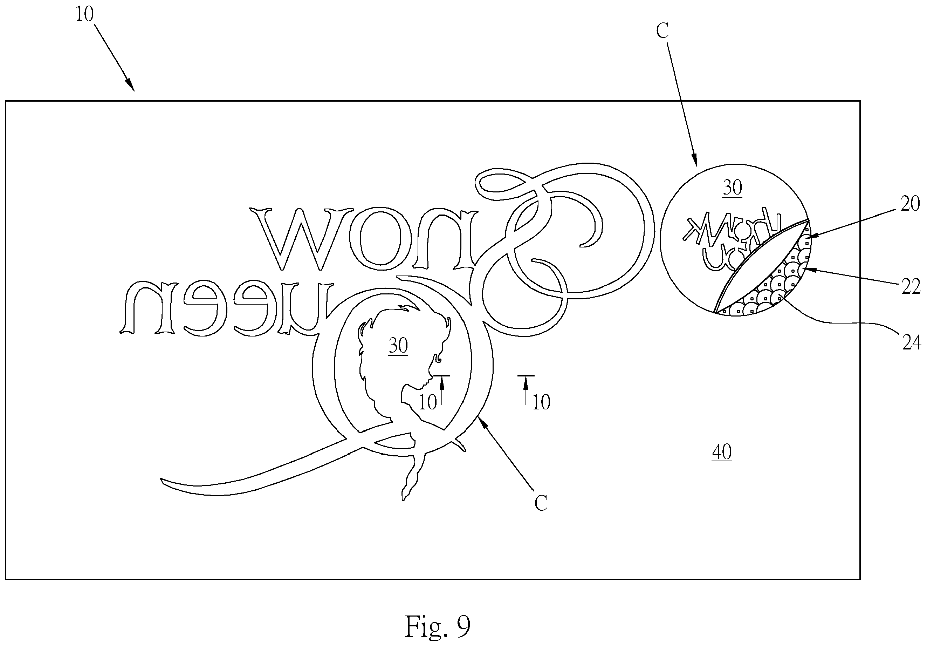

After cutting of the pattern C is completed, the cut waste W is torn off to leave the cut pattern C. FIGS. 9 and 10 show that the cut waste W has been removed, and only the cut pattern C is left, wherein: in this embodiment, Snow Queen and the cartoon character graphic are presented with real lines, while thank you is presented with a hollow font. As shown in FIG. 10, after removing the cut waste W, the remaining pattern C still has the surface film layer 20 and the thermal bonding layer 30, and the pattern C is still adhered on the adhering layer 40.

In implementation, a bonding strength between the surface film layer 20 and the thermal bonding layer 30 is greater than a bonding strength between the surface film layer 20 and the adhering layer 40. Therefore, when the cut waste W is torn off and peeled off, the waste W (the surface film layer 20 and the thermal bonding layer 30 that do not belong to the pattern C) can be easily separated from the adhering layer 40, leaving only the pattern C adhered on the adhering layer 40.

It should be explained that in the process of removing the cut waste W, if any part of the pattern C (for example, the cut piece 24) comes off from the adhering layer 40, resulting in an incomplete pattern, due to the adhering surface 42 having repeatable adhesion, the any part (the cut piece 24) can be adhered back to the adhering surface 42 to restore the integrity of the pattern.

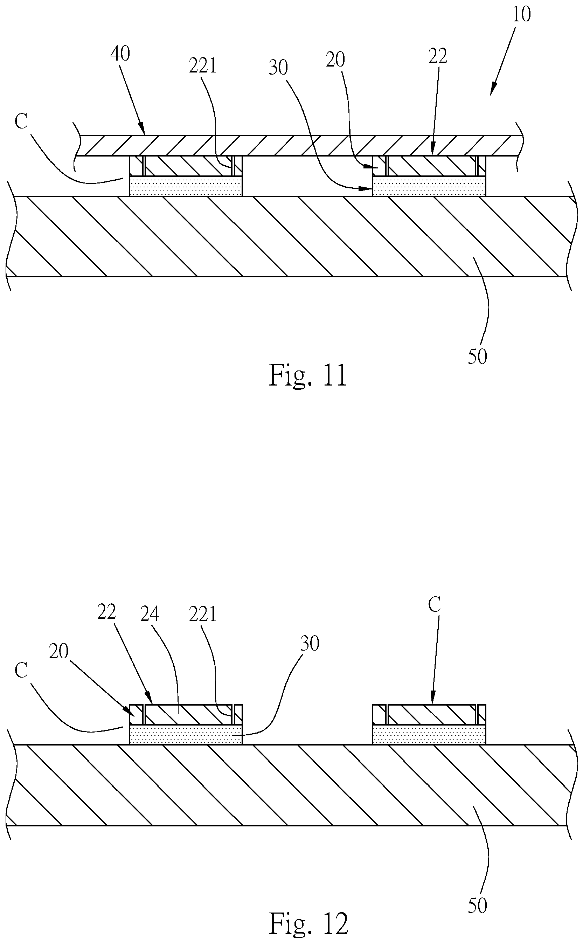

After the cut waste W is removed, then, as shown in FIG. 11, the film material 10 with the pattern C is placed on an article 50 to be adhered, a surface of the article 50 is contacted with the thermal bonding layer 30, and then the film material 10 is heated with a heating device, for example, an iron or a pressing machine to cause the thermal bonding layer 30 to form an adhesive, and the surface film layer 20 of the pattern C is stuck on the article 50. The adhering layer 40 is capable of withstanding heating temperature.

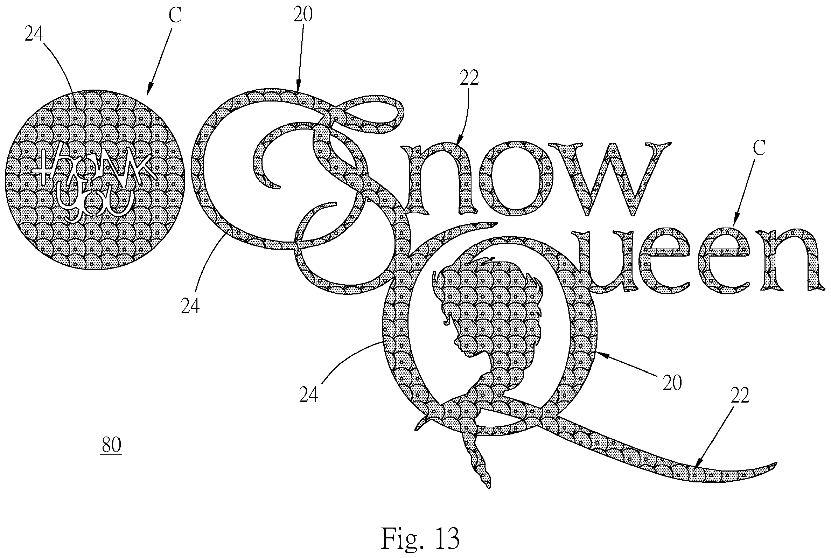

After that, the adhering layer 40 is removed, as shown in FIG. 12, only the surface film layer 20 remains to be adhered on the article 50. An adhering force between the adhering layer 40 and the surface film layer 20 is weak, and it is easy to tear off. FIG. 13 shows the pattern C (texts and/or graphics) cut out from the film material 10 is adhered on the surface of the article 50, and the pattern C is presented on the article 50 with a front view facing outward (non-mirror image). The grains/lines are presented on the pattern C.

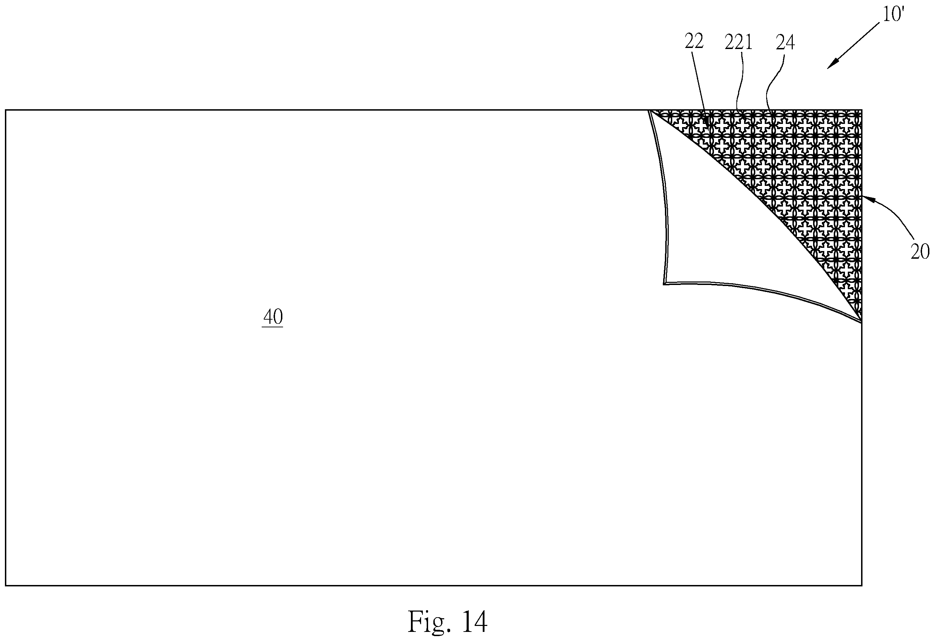

FIGS. 14 to 16 are a second preferred embodiment of a film material 10' of the present invention including: the surface film layer 20, an inner film layer 27, the thermal bonding layer 30 and the adhering layer 40. The structure of this preferred embodiment is generally the same as that of the first preferred embodiment, and the inner film layer 27 is further disposed between the surface film layer 20 and the thermal bonding layer 30. A first surface 271 of the inner film layer 27 is bonded to the second surface 26 of the surface film layer 20, and a second surface 272 of the inner film layer 27 is bonded to the thermal bonding layer 30.

The inner film layer 27 is a film layer located on an inner side of the surface film layer 20, material of the inner film layer 27 can be the same as that of the surface film layer 20, and can also be made with a metallic appearance or a reflective effect. Preferably, the inner film layer 27 and the surface film layer 20 have different colors, for example, the inner film layer 27 has a dark color, and the surface film layer 20 has a light color; and vice versa, in order to produce color contrast.

The first surface of the surface film layer 20 is the cut surface 22, and grains/lines and the cut pieces 24 have been cut with the cut marks 221, preferably the cut marks 221 cut off the surface film layer 20. After the cut surface 22 is cut, the adhering surface 42 of the adhering layer 40 and the cut surface 22 of the surface film layer 20 are bonded together.

A bonding force between the surface film layer 20 and the inner film layer 27 and a bonding force between the inner film layer 27 and the thermal bonding layer 30 are higher than a bonding force between the surface film layer 20 and the adhering layer 40, and therefore, the adhering layer 40 and the surface film layer 20 are relatively easy to separate.

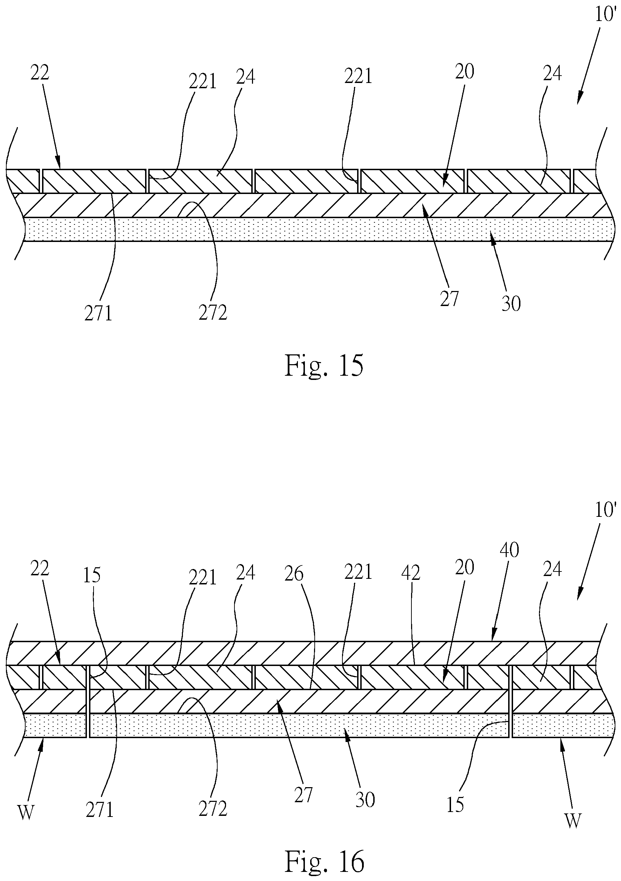

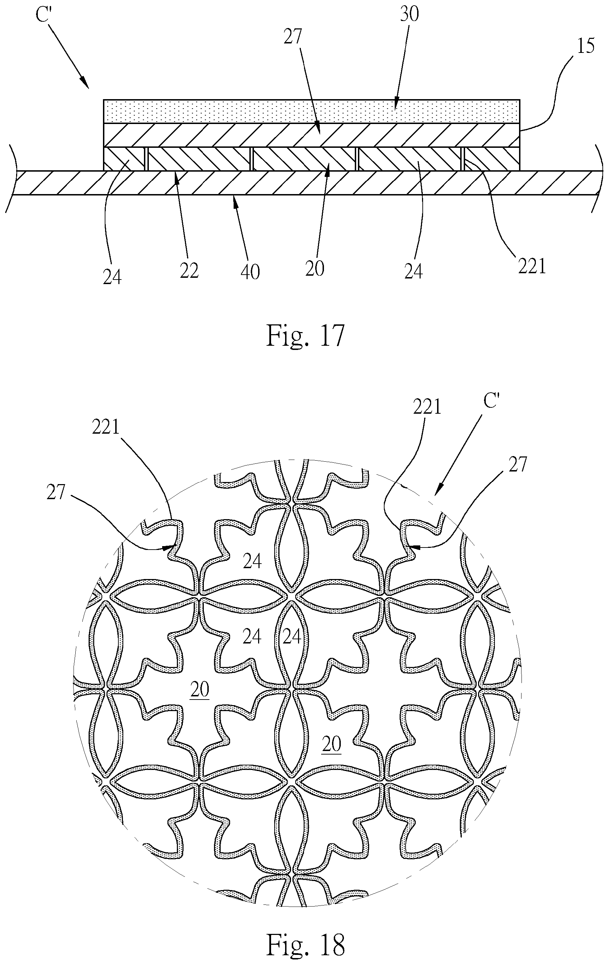

Please refer to FIGS. 16 and 17, the thermal bonding layer 30, the inner film layer 27 and the surface film layer 20 of the film material 10' are cut with a cutting tool or device to cut out a pattern C' (graphics and/or texts), the cutting marks 15 of the pattern C' cut off the thermal bonding layer 30, the inner film layer 27 and the surface film layer 20, but do not cut off the adhering layer 40. Parts other than the pattern C' are the cut waste W (the surface film layer 20, the inner film layer 27, and the thermal bonding layer 30 that are not part of the pattern C') being an unused material.

After cutting of the pattern C' is completed, the cut waste W is removed, leaving the cut pattern C' as shown in FIG. 17. Since the bonding force between the surface film layer 20 and the adhering layer 40 is relatively weak, it is easy to tear off and peel off the cut waste W. Then, the pattern C' of the film material 10 is thermally adhered to a surface of an article with a heating device, and finally the adhering layer 40 is removed to complete pasting of the pattern C'.

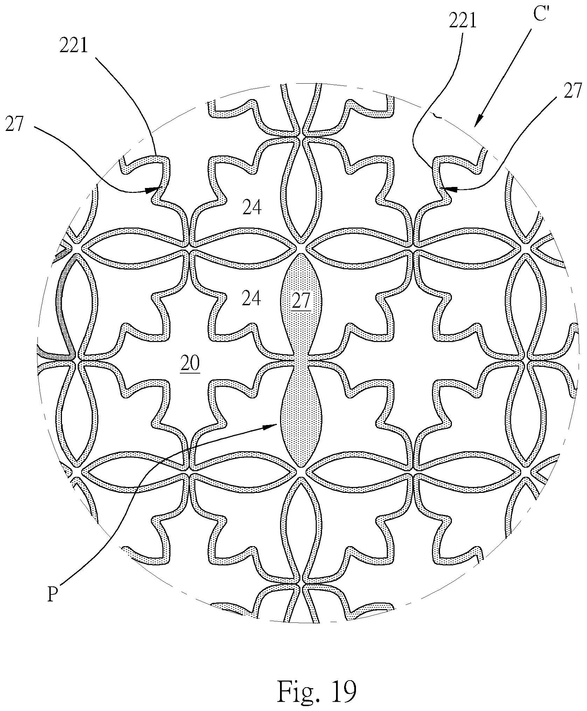

Please refer to FIG. 18, which shows a part of the pattern C' pasted on an article. Since the film material 10' of this embodiment has the two film layers 20, 27, in the pattern C' of this embodiment, the inner film layer 27 can be exposed in the cut marks 221 of the surface film layer 20. Thus, when the surface film layer 20 and the inner film layer 27 are made to have different colors, the pattern C' reveals two colors. In addition, before removing the cut waste W and performing thermal bonding, a user can also remove cut pieces at specific positions of the film material 10', for example, a cut piece shown at a position P in FIG. 19 is removed. In this way, shape and color of the inner film layer 27 at the position P are more prominent, enhancing the richness of the pattern C'.

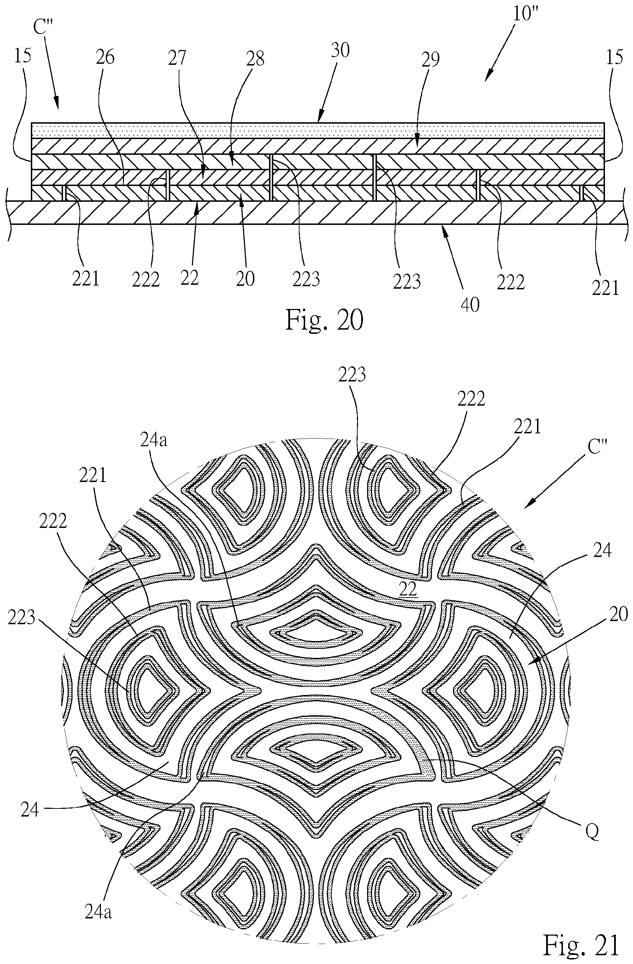

One or more than one of the inner film layers can be provided between the surface film layer 20 and the thermal bonding layer 30 of the film material. A film material 10" of a third preferred embodiment of FIGS. 20 and 21 discloses two or more than two of the inner film layers. The film material 10" has: the surface film layer 20, a first inner film layer 27, a second inner film layer 28, a third inner film layer 29, the thermal bonding layer 30 and the adhering layer 40. The first, second, and third inner film layers 27, 28, 29 are adhered between the surface film layer 20 and the thermal bonding layer 30, and are sequentially arranged in a direction from the surface film layer 20 toward the thermal bonding layer 30. The first inner film layer 27 is bonded to the second surface 26 of the surface film layer 20; the second inner film layer 28 is bonded to another surface of the first inner film layer 27; the third inner film layer 29 is disposed between the second inner film layer 28 and the thermal bonding layer 30. The three inner film layers 27, 28, 29 are preferably made with different colors.

A plurality of cut marks 221, 222, 223 are formed by cutting the film material 10", so that the cut surface 22 is formed with grains/lines, and the cut surface 22 has the cut pieces 24 and small-sized cut pieces 24a. Wherein: the cut marks 221, 222, 223 have different (cutting) depths, a cutting depth of the first cut mark 221 only cuts off the surface film layer 20, and does not cut off any of the inner film layers 27~29; a cutting depth of the second cut mark 222 only cuts off the surface film layer 20 and the first inner film layer 27; and a cutting depth of the third cut mark 223 cuts off the surface film layer 20 and the first and second inner film layers 27, 28, but does not cut off the third inner film layer 29. Then, a pattern C" is cut out from the film material 10" with the cutting marks 15 and the cut waste W is removed to form the film material 10" of FIG. 20. Then, the pattern C" of the film material 10" is adhered to an article with a heating device or appliance, as shown in FIG. 21.

Since the film material 10" of this embodiment has the inner film layers 27 to 29 and the cut marks 221 to 223 with different (cutting) depths, in addition to the cut surface 22 of the pattern C" having cut grains/lines and a color of the surface film layer 20, other colors can be presented, that is, the first inner film layer 27 and its color are exposed at the first cut marks 221, the second inner film layer 28 and its color are exposed at the second cut marks 222, and the third inner film layer 29 and its color are exposed at the third cut marks 223. Thus, the pattern C" presents four colors.

When peeling off/removing the cut waste W, if some of the cut pieces 24 or small cut pieces 24a are removed, for example, the small cut piece 24a shown at a position Q is peeled off with the cut waste W, a color of the first inner film layer 27 can be displayed at the position Q.

The film materials 10, 10' and 10" provided by the present invention can be used to cut out the various patterns (texts and graphics) C, C' and C" to be conveniently pasted on an article. The texts and graphics of the patterns can be cut according to a required style, speed of changing graphics/texts is fast, and plate making is not required. The cutting grain on the surface film layer 20 and the pre-set cut pieces 24 do not affect cutting of the pattern, removal of the cut waste W and sticking of the pattern. According to the design of the present invention, the cut waste W can be conveniently removed, and the cut pattern (texts/graphics) can be quickly and conveniently adhered to a surface of the article.

The cutting grain/line formed on the cut surface 22 of the film material 10 becomes the grain/line of the pattern C, and the cutting grain/line makes the pattern C softer and more flexible, the pattern C can be reliably adhered on the surface of the article, and can be bent and flexed with the article (for example, fabric).

In the present invention, the cut surface 22 of the film materials 10', 10" and the patterns C', C" can have a two-color and multi-color appearance to enhance stereoscopic and color changing effects of the patterns C', C".

## Claims

1. A film material (10, 10', 10") with a cutting grain including:
a surface film layer (20), one surface thereof forming a cut surface (22) with a cutting grain; another surface of the surface film layer (20) being a second surface (26);
a thermal bonding layer (30) located on the second surface (26) of the surface film layer (20), capable of generating adhesion when being heated; the second surface (26) of the surface film layer (20) being directly or indirectly bonded to the thermal bonding layer (30); and
an adhering layer (40) having an adhering surface (42); the cut surface (22) of the surface film layer (20) being bonded to the adhering surface (42) of the adhering layer (40);
the cutting grain having cut marks (221, 222, 223) formed on the cut surface (22), and the cut marks (221, 222, 223) cutting into the surface film layer (20) from the cut surface (22) without cutting off the thermal bonding layer (30).

2. The film material (10, 10', 10") as claimed in claim 1, wherein the cut marks (221, 222, 223) of the cutting grain cut off the surface film layer (20) to form cut pieces (24, 24b, 24c, 24d) or do not cut off the surface film layer (20).

3. The film material (10', 10") as claimed in claim 1, further comprising at least one inner film layer (27, 28, 29) disposed between the surface film layer (20) and the thermal bonding layer (30); and the cut marks (221, 222, 223) with at least one type of depth cutting into the surface film layer (20) from the cut surface (22) without cutting off the thermal bonding layer (30).

4. The film material (10', 10") as claimed in claim 3, comprising at least two inner film layers (27, 28, 29) disposed between the surface film layer (20) and the thermal bonding layer (30); and the cut marks (221, 222, 223) with at least two types of depths cutting into the surface film layer (20) and the at least two inner film layers (27, 28, 29) from the cut surface (22) without cutting off the thermal bonding layer (30).

5. The film material (10, 10', 10") as claimed in claim 1, wherein the adhering surface (42) of the adhering layer (40) has repeatable adhesion.

6. The film material (10, 10', 10") as claimed in any of claims 1 to 5, wherein the film material (10, 10', 10") is cut out with a pattern (C, C' and C''), and a cutting mark (15) of the pattern (C, C and C'') cuts off the thermal bonding layer (30) to reach the surface film layer (20).

7. The film material (10, 10', 10") as claimed in claim 6, wherein parts other than the pattern (C, C' and C") are a cut waste (W) that can be removed.

8. The film material (10', 10") as claimed in claim 3, wherein the film material (10', 10") is cut out with a pattern (C' and C"), and a cutting mark (15) of the pattern (C' and C") cuts off the thermal bonding layer (30), the inner film layer (27) and the surface film layer (20).

9. The film material (10', 10") as claimed in claim 8, wherein parts other than the pattern (C' and C") are a cut waste (W), and the cut waste (W) is removed.

10. The film material (10', 10") as claimed in claim 3, wherein the cut marks (221, 222, 223) include a cut mark with a cutting depth at least cutting off the surface film layer (20), and the at least one inner film layer (27) is exposed at the cut mark with the cutting depth.

11. The film material (10', 10") as claimed in claim 4, wherein the inner film layers at least include a first inner film layer (27) and a second inner film layer (28) arranged from the surface film layer (20) toward the thermal bonding layer (30); the cut marks at least include a first cut mark (221) with a first depth and a second cut mark (222) with a second depth, the first cut mark (221) with the first depth cuts off the surface film layer (20); the second cut mark (222) with the second depth cuts off the surface film layer (20) and the first inner film layer (27); the first inner film layer (27) is exposed at the first cut mark (221); and the second inner film layer (28) is exposed at the second cut mark (222).

12. The film material (10', 10") as claimed in claim 3, 4, 10 or 11 wherein the surface film layer (20) and at least one of the inner film layers (27, 28, 29) have different colors or different appearance textures.

13. The film material (10', 10") as claimed in claim 3, 4, 10 or 11 wherein the surface film layer (20) and each of the inner film layers (27, 28, 29) have different colors or different appearance textures.

14. The film material (10, 10', 10") as claimed in claim 1, wherein a bonding strength between the surface film layer (20) and the thermal bonding layer (30) is greater than a bonding strength between the surface film layer (20) and the adhering layer (40).

15. The film material (10, 10', 10") as claimed in claim 1, wherein the cut marks (15) of the cut surface (22) cut off the surface film layer (20) to form a plurality of cut pieces (24, 24b, 24c, 24d) on the cut surface (22).

## Patentansprüche

1. Filmmaterial (10, 10', 10") mit einem Schneidkorn, umfassend:
eine Oberflächenfilmschicht (20), deren eine Oberfläche eine Schnittfläche (22) mit einem Schneidkorn bildet, wobei eine andere Oberfläche der Oberflächenfilmschicht (20) eine zweite Oberfläche (26) ist,
eine thermische Bindeschicht (30), die auf der zweiten Oberfläche (26) der Oberflächenfilmschicht (20) angeordnet ist und in der Lage ist, bei Erwärmung eine Haftung zu erzeugen, wobei die zweite Oberfläche (26) der Oberflächenfilmschicht (20) direkt oder indirekt mit der thermischen Bindeschicht (30) verbunden ist, und
eine Haftschicht (40) mit einer Haftfläche (42), wobei die Schnittfläche (22) der Oberflächenfilmschicht (20) mit der Haftfläche (42) der Haftschicht (40) verbunden ist,
wobei das Schneidkorn auf der Schnittfläche (22) ausgebildete Schnittmarkierungen (221, 222, 223) aufweist und die Schnittmarkierungen (221, 222, 223) von der Schnittfläche (22) aus in die Oberflächenfilmschicht (20) schneiden, ohne die thermische Bindeschicht (30) abzuschneiden.

2. Filmmaterial (10, 10', 10") nach Anspruch 1, bei welchem die Schnittmarkierungen (221, 222, 223) des Schneidkorns die Oberflächenfilmschicht (20) zur Bildung von Schnittstücken (24, 24b, 24c, 24d) abschneiden oder die Oberflächenfilmschicht (20) nicht abschneiden.

3. Filmmaterial (10', 10") nach Anspruch 1, ferner umfassend mindestens eine Innenfilmschicht (27, 28, 29), die zwischen der Oberflächenfilmschicht (20) und der thermischen Bindeschicht (30) angeordnet ist, und die Schnittmarkierungen (221, 222, 223) mit mindestens einer Art von Tiefenschnitt in der Oberflächenfilmschicht (20) der Schnittfläche (22), ohne die thermische Bindeschicht (30) abzuschneiden.

4. Filmmaterial (10', 10") nach Anspruch 3, umfassend mindestens zwei Innenfilmschichten (27, 28, 29), die zwischen der Oberflächenfilmschicht (20) und der thermischen Bindeschicht (30) angeordnet sind; und die Schnittmarkierungen (221, 222, 223) mit mindestens zwei Arten von Tiefen, die in die Oberflächenfilmschicht (20) und die mindestens zwei Innenfilmschichten (27, 28, 29) von der Schnittfläche (22) aus einschneiden, ohne die thermische Bindeschicht (30) abzuschneiden.

5. Filmmaterial (10, 10', 10") nach Anspruch 1, bei welchem die Haftfläche (42) der Haftschicht (40) eine reproduzierbare Haftung aufweist.

6. Filmmaterial (10, 10', 10") nach einem der Ansprüche 1 bis 5, bei welchem das Filmmaterial (10, 10', 10") mit einem Muster (C, C' und C") ausgeschnitten ist und eine Schnittmarkierung (15) des Musters (C, C' und C") die thermische Bindeschicht (30) abschneidet, um die Oberflächenfilmschicht (20) zu erreichen.

7. Filmmaterial (10, 10', 10") nach Anspruch 6, bei welchem andere Teile als das Muster (C, C' und C") ein Schnittabfall (W) sind, der entfernt werden kann.

8. Filmmaterial (10', 10") nach Anspruch 3, bei welchem das Filmmaterial (10', 10") mit einem Muster (C' und C") ausgeschnitten ist und eine Schnittmarkierung (15) des Musters (C' und C") die thermische Bindeschicht (30), die Innenfilmschicht (27) und die Oberflächenfilmschicht (20) abschneidet.

9. Filmmaterial (10', 10") nach Anspruch 8, bei welchem andere Teile als das Muster (C' und C") ein Schnittabfall (W) sind, und der Schnittabfall (W) entfernt wird.

10. Filmmaterial (10', 10") nach Anspruch 3, bei welchem die Schnittmarkierungen (221, 222, 223) eine Schnittmarkierung mit einer Schnitttiefe umfassen, die zumindest die Oberflächenfilmschicht (20) abschneidet, und die mindestens eine Innenfilmschicht (27) wird an der Schnittmarkierung mit der Schnitttiefe freigelegt.

11. Filmmaterial (10', 10") nach Anspruch 4, bei welchem die Innenfilmschichten mindestens eine erste Innenfilmschicht (27) und eine zweite Innenfilmschicht (28) umfassen, die von der Oberflächenfilmschicht (20) in Richtung der thermischen Bindeschicht (30) angeordnet sind, wobei die Schnittmarkierungen mindestens eine erste Schnittmarkierung (221) mit einer ersten Tiefe und eine zweite Schnittmarkierung (222) mit einer zweiten Tiefe umfassen, wobei die erste Schnittmarkierung (221) mit der ersten Tiefe die Oberflächenfilmschicht (20) abschneidet, wobei die zweite Schnittmarkierung (222) mit der zweiten Tiefe die Oberflächenfilmschicht (20) und die erste Innenfilmschicht (27) abschneidet, wobei die erste Innenfilmschicht (27) an der ersten Schnittmarkierung (221) freigelegt wird und die zweite Innenfilmschicht (28) an der zweiten Schnittmarkierung (222) freigelegt wird.

12. Filmmaterial (10', 10") nach Anspruch 3, 4, 10 oder 11, bei welchem die Oberflächenfilmschicht (20) und mindestens eine der Innenfilmschichten (27, 28, 29) unterschiedliche Farben oder unterschiedliche Erscheinungstexturen aufweisen.

13. Filmmaterial (10', 10") nach Anspruch 3, 4, 10 oder 11, bei welchem die Oberflächenfilmschicht (20) und jede der Innenfilmschichten (27, 28, 29) unterschiedliche Farben oder unterschiedliche Erscheinungstexturen aufweisen.

14. Filmmaterial (10, 10', 10") nach Anspruch 1, bei welchem eine Haftfestigkeit zwischen der Oberflächenfilmschicht (20) und der thermischen Bindeschicht (30) größer ist als eine Haftfestigkeit zwischen der Oberflächenfilmschicht (20) und der Haftschicht (40).

15. Filmmaterial (10, 10', 10") nach Anspruch 1, bei welchem die Schnittmarkierungen (15) der Schnittfläche (22) die Oberflächenfilmschicht (20) abschneiden, um eine Vielzahl von Schnittstücken (24, 24b, 24c, 24d) auf der Schnittfläche (22) zu bilden.

## Revendications

1. Matériau de film (10, 10', 10") avec un grain de découpe incluant :
une couche de film de surface (20), une surface de celle-ci formant une surface découpée (22) avec un grain de découpe ; une autre surface de la couche de film de surface (20) étant une seconde surface (26) ;
une couche de liage thermique (30) située sur la seconde surface (26) de la couche de film de surface (20), capable de générer une adhérence lorsqu'elle est chauffée ; la seconde surface (26) de la couche de film de surface (20) étant directement ou indirectement liée à la couche de liage thermique (30) ; et
une couche d'adhérence (40) présentant une surface d'adhérence (42) ; la surface découpée (22) de la couche de film de surface (20) étant liée à la surface d'adhérence (42) de la couche d'adhérence (40) ;
le grain de découpe présentant des marques découpées (221, 222, 223) formées sur la surface découpée (22), et les marques découpées (221, 222, 223) découpant dans la couche de film de surface (20) à partir de la surface découpée (22) sans enlever la couche de liage thermique (30).

2. Matériau de film (10, 10', 10") selon la revendication 1, dans lequel les marques découpées (221, 222, 223) du grain de découpe enlèvent la couche de film de surface (20) pour former des pièces découpées (24, 24b, 24c, 24d) ou n'enlèvent pas la couche de film de surface (20).

3. Matériau de film (10', 10") selon la revendication 1, comprenant en outre au moins une couche de film intérieure (27, 28, 29) disposée entre la couche de film de surface (20) et la couche de liage thermique (30) ; et les marques découpées (221, 222, 223) avec au moins un type de profondeur découpant dans la couche de film de surface (20) à partir de la surface découpée (22) sans enlever la couche de liage thermique (30).

4. Matériau de film (10', 10") selon la revendication 3, comprenant au moins deux couches de film intérieures (27, 28, 29) disposées entre la couche de film de surface (20) et la couche de liage thermique (30) ; et les marques découpées (221, 222, 223) avec au moins deux types de profondeurs découpant dans la couche de film de surface (20) et les au moins deux couches de film intérieures (27, 28, 29) à partir de la surface découpée (22) sans enlever la couche de liage thermique (30).

5. Matériau de film (10, 10', 10") selon la revendication 1, dans lequel la surface d'adhérence (42) de la couche d'adhérence (40) présente une adhérence répétable.

6. Matériau de film (10, 10', 10") selon l'une quelconque des revendications 1 à 5, dans lequel le matériau de film (10, 10', 10") est enlevé avec un motif (C, C' et C"), et une marque de découpe (15) du motif (C, C' et C") enlève la couche de liage thermique (30) pour atteindre la couche de film de surface (20).

7. Matériau de film (10, 10', 10") selon la revendication 6, dans lequel des parties autres que le motif (C, C' et C") sont des déchets découpés (W) qui peuvent être retirés.

8. Matériau de film (10', 10") selon la revendication 3, dans lequel le matériau de film (10', 10") est enlevé avec un motif (C' et C"), et une marque de découpe (15) du motif (C' et C") enlève la couche de liage thermique (30), la couche de film intérieure (27) et la couche de film de surface (20)

9. Matériau de film (10', 10") selon la revendication 8, dans lequel des parties autres que le motif (C' et C") sont des déchets découpés (W), et les déchets découpés (W) sont retirés.

10. Matériau de film (10', 10") selon la revendication 3, dans lequel les marques découpées (221, 222, 223) incluent une marque découpée avec une profondeur de découpe enlevant au moins la couche de film de surface (20), et la au moins une couche de film intérieure (27) est exposée au niveau de la marque découpée avec la profondeur de découpe.

11. Matériau de film (10', 10") selon la revendication 4, dans lequel les couches de film intérieures incluent au moins une première couche de film intérieure (27) et une deuxième couche de film intérieure (28) agencée depuis la couche de film de surface (20) vers la couche de liage thermique (30) ; les marques découpées incluent au moins une première marque découpée (221) avec une première profondeur et une deuxième marque découpée (222) avec une deuxième profondeur, la première marque découpée (221) avec la première profondeur enlève la couche de film de surface (20) ; la deuxième marque découpée (222) avec la deuxième profondeur enlève la couche de film de surface (20) et la première couche de film intérieure (27) ; la première couche de film intérieure (27) est exposée au niveau de la première marque découpée (221) ; et la deuxième couche de film intérieure (28) est exposée au niveau de la deuxième marque découpée (222).

12. Matériau de film (10', 10") selon la revendication 3, 4, 10 ou 11 dans lequel la couche de film de surface (20) et au moins une des couches de film intérieures (27, 28, 29) présentent différentes couleurs ou différentes textures d'aspect.

13. Matériau de film (10', 10") selon la revendication 3, 4, 10 ou 11 dans lequel la couche de film de surface (20) et chacune des couches de film intérieures (27, 28, 29) présentent différentes couleurs ou différentes textures d'aspect.

14. Matériau de film (10, 10', 10") selon la revendication 1, dans lequel une résistance de liage entre la couche de film de surface (20) et la couche de liage thermique (30) est supérieure à une résistance de liage entre la couche de film de surface (20) et la couche d'adhérence (40).

15. Matériau de film (10, 10', 10") selon la revendication 1, dans lequel les marques découpées (15) de la surface découpée (22) enlèvent la couche de film de surface (20) pour former une pluralité de pièces découpées (24, 24b, 24c, 24d) sur la surface découpée (22).
